# EUROPEAN PATENT SPECIFICATION

(11) **EP 4 108 496 B1**
(45) Date of publication and mention of the grant of the patent: **13.08.2025**
(21) Application number: 21180915.7
(22) Date of filing: 22.06.2021
(51) Int. Cl.: B60L 3/00, B60L 58/20, B60L 1/12, H02M 3/335, H02J 9/06, H01M 10/42, H02J 1/08, H02M 1/00, H02M 1/10, H02J 7/34

(54) **BIDIRECTIONAL POWER SUPPLY SYSTEM FOR POWERING A BATTERY MANAGEMENT SYSTEM OF AN ELECTRIC VEHICLE**
BIDIREKTIONALES STROMVERSORGUNGSSYSTEM ZUR SPEISUNG EINES BATTERIEMANAGEMENTSYSTEMS EINES ELEKTRISCHEN FAHRZEUGS
SYSTÈME D'ALIMENTATION BIDIRECTIONNELLE POUR ALIMENTER UN SYSTÈME DE GESTION DE BATTERIE D'UN VÉHICULE ÉLECTRIQUE

(43) Date of publication of application: 28.12.2022
(73) Proprietor: Samsung SDI Co., Ltd., Yongin-si, Gyeonggi-do 17084 (KR)
(72) Inventor: Flatscher, Matthias, 8020 Graz (AT); Kurcik, Peter, 8505 St. Nikolai im Sausal (AT)
(74) Representative: Gulde & Partner

(56) References cited:
- EP-A1- 3 722 137
- WO-A1-2018/153679
- CN-A- 104 827 921
- US-A1- 2018 186 241
- US-A1- 2018 334 118
- US-A1- 2019 190 294
- US-A1- 2020 335 991

## Description

### Field of the Disclosure

The present invention relates to a bidirectional power supply system for powering one or more components of a low voltage board net, in particular a battery management system, of an electric vehicle. The invention further relates to an electric vehicle comprising such a bidirectional power supply system.

### Technological Background

In the recent years, vehicles for transportation of goods and peoples have been developed using electric power as a source for motion. Such an electric vehicle is an automobile that is propelled by an electric motor, using energy stored in rechargeable batteries. An electric vehicle may be solely powered by batteries or may be a form of hybrid vehicle powered by for example a gasoline generator. Furthermore, the vehicle may include a combination of electric motor and conventional combustion engine. In general, an electric-vehicle battery, EVB, or traction battery is a battery used to power the propulsion of battery electric vehicles, BEVs. Electric-vehicle batteries differ from starting, lighting, and ignition batteries because they are designed to give power over sustained periods of time. A rechargeable or secondary battery differs from a primary battery in that it can be repeatedly charged and discharged, while the latter provides only an irreversible conversion of chemical to electrical energy. Low-capacity rechargeable batteries are used as power supply for small electronic devices, such as cellular phones, notebook computers and camcorders, while high-capacity rechargeable batteries are used as the power supply for hybrid vehicles and the like.

In general, rechargeable batteries include an electrode assembly including a positive electrode, a negative electrode, and a separator interposed between the positive and negative electrodes, a case receiving the electrode assembly, and an electrode terminal electrically connected to the electrode assembly. An electrolyte solution is injected into the case in order to enable charging and discharging of the battery via an electrochemical reaction of the positive electrode, the negative electrode, and the electrolyte solution. The shape of the case, e.g. cylindrical or rectangular, depends on the battery's intended purpose. Lithium-ion (and similar lithium polymer) batteries, widely known via their use in laptops and consumer electronics, dominate the most recent group of electric vehicles in development.

Rechargeable batteries may be used as a battery module formed of a plurality of unit battery cells coupled in series and/or in parallel so as to provide a high energy density, in particular for motor driving of a hybrid vehicle. That is, the battery module is formed by interconnecting the electrode terminals of the plurality of unit battery cells depending on a required amount of power and in order to realize a high-power rechargeable battery.

Battery modules can be constructed either in block design or in modular design. In block designs each battery is coupled to a common current collector structure and a common battery management system and the unit thereof is arranged in a housing. In modular designs, pluralities of battery cells are connected to form submodules and several submodules are connected to form the battery module. In automotive applications, battery systems often consist of a plurality of battery modules connected in series for providing a desired voltage. Therein, the battery modules may comprise submodules with a plurality of stacked battery cells, each stack comprising cells connected in parallel that are connected in series *(XpYs)* or multiple cells connected in series that are connected in parallel *(XsYp).*

A battery pack is a set of any number of (preferably identical) battery modules. They may be configured in a series, parallel or a mixture of both to deliver the desired voltage, capacity, or power density. Components of battery packs include the individual battery modules, and the interconnects, which provide electrical conductivity between them.

For meeting the dynamic power demands of various electrical consumers connected to the battery system a static control of battery power output and charging is not sufficient. Thus, steady exchange of information between the battery system and the controllers of the electrical consumers is required. This information includes the battery systems actual state of charge, SoC, potential electrical performance, charging ability and internal resistance as well as actual or predicted power demands or surpluses of the consumers. Therefore, battery systems usually comprise a battery management system, BMS, for obtaining and processing such information on system level and further a plurality of battery module managers, BMMs, which are part of the system's battery modules and obtain and process relevant information on module level. Particularly, the BMS usually measures the system voltage, the system current, the local temperature at different places inside the system housing, and the insulation resistance between live components and the system housing. Additionally, the BMMs usually measure the individual cell voltages and temperatures of the battery cells in a battery module.

Thus, the BMS/BMU (Battery Management Unit) is provided for managing the battery pack, such as by protecting the battery from operating outside its safe operating area, monitoring its state, calculating secondary data, reporting that data, controlling its environment, authenticating it and/or balancing it.

In general, an electric vehicle has a high voltage (HV) board net comprising the traction battery supplying the propulsion components with power and a low voltage (LV) board net comprising a low voltage battery supplying power to electronic consumers of the vehicle. In particular the BMS of the traction battery which is arranged at the LV board net is usually driven by the low voltage battery. The LV board net and the HV board net are galvanically isolated from one another via a DC-DC-converter which transfers energy from LV board net to HV board net so that components of the HV board net can be powered by the low voltage battery of the LV board net as well. The low voltage battery as the primary power supply of the LV board net can e.g. be a common lead acid battery of the vehicle. The poles of the low voltage battery will in the following also be named CL30 and CL31 for the positive pole and the negative pole, respectively.

During operation of the vehicle it may happen that the CL30, i.e. the connection to the positive pole, is unintentionally lost leaving the BMS without power. Said connection loss may also lead to an opening of the main relays, which galvanically disconnect the cells of the battery from the HV board net, which may damage the contact surfaces of the relays. In this case, the BMS has no information about the current going through these relays at the time when the contactors opened and therefore no information can be derived about any actual physical damage to the contact surfaces.

As a backup power supply for the BMS the traction battery of the electric vehicle may be used which, in case of an HV battery (> 60 V), has to be galvanically isolated from the LV board net. Usually, such backup power supply is implemented as a separate functional block which is idle during normal operation and starts up only when the main power supply is lost. Usual configurations of BMSs use a shunt based current measurement located mostly on the negative side of the battery cellstack or on the negative output of the battery. A shunt based measurement circuit comprises a current measuring resistor of a low impedance. This measurement circuit must be galvanically isolated from the rest of the LV-based BMS.

Because of the requirement of galvanic isolation, DC-DC converters are used which are utilizing transformers to transfer energy from the LV board net to the HV board net. Such transformers are usually the most expensive part of the power supply.

EP 1 801 960 A2 describes a bidirectional DC-DC converter.

US 2018/0334118 A1 describes a power distribution system of a vehicle, the system comprising two batteries to improve reliability of the power supply to a load in case of a power supply failure.

WO 2018/153679 A1 relates to a device for operating a motor vehicle, comprising an electrical drive system with an electrical high-voltage traction network and an operating network that has a high-voltage unit comprising a power electronics system, and a low-voltage unit comprising a control electronics system, and a first transformer designed to convert an input voltage from the low-voltage unit into a first, particularly higher output voltage for the power electronics system, wherein the device comprises at least one second transformer designed to convert the first output voltage of the first transformer into a second output voltage for the control electronics system, the second output voltage being higher than the input voltage.

US 2019/190294 A1 relates to an electric power supply system of an electrical vehicle, wherein the control electric power supply management device transmits, depending on a magnitude in voltage level between first and second voltages, one of first and second powers to the battery controller from one of first and second power supply lines via a joining line.

It is thus an object of the present invention to overcome or reduce at least some of the drawbacks of the prior art and to provide a bidirectional power supply system for a low voltage board net of an electric vehicle that allows for a reliable power supply.

### Summary of Invention

The invention is set out in the appended set of claims, wherein the figures and respective description relate to advantageous embodiments thereof. The description that follows is subjected to this limitation. Any disclosure lying outside the scope of said claims is only intended for illustrative as well as comparative purposes.

Embodiments of the present disclosure seek to solve at least one of the problems existing in the prior art to at least some extent.

In particular, the bidirectional power supply system for powering a battery management system of an electric vehicle according to the invention comprises a low voltage (LV) primary power supply adapted to power a control unit, in particular the battery management system (BMS), in a first mode of operation, the control unit (in particular the BMS) being a component of a low voltage board net, a high voltage (HV) traction battery of the electric vehicle as part of a high voltage board net, and a bidirectional DC-DC converter adapted to, in the first mode of operation, transfer energy from the low voltage board net to the high voltage board net to power components of the high voltage board net via the primary power supply, the DC-DC converter being further adapted to, in a second mode of operation, transfer energy of the high voltage board net to the low voltage board net to power the control unit (BMS), and possibly further components of the low voltage board net, via the high voltage traction battery in case of loss of the primary power supply, the bidirectional power supply system further comprising a measurement element adapted to detect whether the primary power supply is lost, and a switching element adapted to switch operation of the DC-DC converter from the first mode to the second mode, if loss of the primary power supply is detected.

The DC-DC converter comprises a transformer that is adapted as explained above, i.e. to transfer energy between the LV board net and the HV board net in both directions. The control unit that can be the BMS, in particular. Also, the control unit may be part of the BMS. In the following, the control unit will be named BMS without intention to limitation.

During normal operation the primary power supply supplies the BMS and possibly further or all components of the LV board net with power/energy. The primary power supply may e.g. be a 12, 24, or 48 V power supply. Furthermore, the primary power supply may supply components of the HV board net with power/energy, wherein energy is transferred from the LV board net via the bidirectional DC-DC converter to the HV board net. In particular, the DC-DC converter may transform the LV of the primary power supply to an LV or to an HV suitable for powering components of the HV board net. Thus, components of the HV board net may be powered by an LV as well, in particular by the LV of the primary power supply or by suitably transformed LV. In this first mode of operation e.g. a PWM (pulse-width modulation signal) generator may be driven by the LV board system and triggered by the BMS.

Should the primary power supply be lost, e.g. by losing a connection of the primary power supply to the LV board net as explained above, the second mode of operation comes into play. The bidirectional DC-DC converter is adapted to transfer energy in both directions, i.e. to also transfer energy from the HV board net to the LV board net. Thus, in the second mode of operation the HV traction battery of the electric vehicle is used as a backup power supply to power components of the low voltage board net, in particular the BMS. Preferably, only a part of the battery cells or cellstacks of the HV traction battery are used as a backup power supply in the second mode. To detect whether the primary power supply is lost, a measurement element is provided. Further a switching element is provided to switch operation of the DC-DC converter from the first mode to the second mode if a loss of the primary power supply is detected. The measurement element and the switching element may be the same element, in particular they may be realized by a PWM detector. The measurement element and/or the switching element may form part of the BMS. The measurement element and/or the switching element are preferably part of the HV board net. The system may form part of a push-pull converter.

Thus, via the measurement and switching elements the system may automatically switch to the HV battery as a backup power supply if the primary LV battery fails to deliver power/energy, e.g. because the CL30 is unintentionally lost. As a result, an uninterrupted power supply to the BMS is ensured. This ensures the working of the BMS. In particular, the BMS can thus receive information about the current going through the relays at the time the contactors opened so that information can be derived about any physical damage to the contact surfaces. In addition, the use of the DC-DC converter, in particular its transformer, is cost efficient compared to using a second independent transformer for transferring energy from HV to LV.

According to the invention, the measurement element comprises a PWM detector arranged at the high voltage board net, i.e. at the high voltage side of the DC-DC converter/transformer, the PWM detector being adapted to analyze a pulse-width modulation signal present on the HV side of the DC-DC converter and detect based on the analyzed signal whether the primary power supply is lost. Thus, the PWM detector works as the measurement element. It may be a result of the signal analyzation that the low voltage side is not switching/operating the transformer which may be interpreted as a loss of the primary power supply. According to the invention, the PWM detector is adapted to switch operation of the DC-DC converter to the second mode as soon as it detects that that the primary power supply is lost. Thus, the PWM detector works as the switching element as well. Therefore, if the analyzation of the pulse-width modulation signal present on the HV side of the DC-DC converter/transformer results in the conclusion that the primary power supply is lost, the PWM detector may switch the operational mode so that the LV board net and in particular the BMS is supplied by the HV traction battery. Such a PWM detector allows for an efficient and timely response to the loss of the primary power supply.

According to a further embodiment at least one capacitor is provided which is adapted to supply the measurement element with power in case of loss of the primary power supply long enough to allow the measurement element to detect that the primary power supply is lost. Also, the same or another capacitor may be provided adapted to supply the switching element long enough to allow the switching element to switch operation of the DC-DC converter to the second mode. Thus, the at least one capacitor may in particular be adapted to supply the PWM detector with power in case of loss of the primary power supply long enough to allow the PWM detector to detect that the primary power supply is lost and to switch operation of the bidirectional DC-DC converter to the second mode. Thus, the at least one capacitor may work as an interim power supply for the measurement and switching element after loss of the primary power supply and before switching to the HV board net and its traction battery as a backup power supply. The at least one capacitor may be charged during normal operation, i.e. during the first mode of operation, via the primary power supply. Such a capacitor can ensure the switching to the second mode.

According to an embodiment the bidirectional power supply system comprises a control unit for generating a pulse-width modulation signal during the first mode of operation, the control unit being arranged at the low voltage board net, i.e. at the low voltage side of the DC-DC converter/transformer, wherein the control unit is adapted to detect that the primary power supply is lost. The control unit may be part of the BMS or it may be a separate control unit, e.g. a microcontroller unit (MCU). In general, it is the control units purpose to generate one or more PWM signals during normal operation of the system, i.e. during the first mode of operation. The control unit may detect the loss of primary power e.g. by detecting that the CL30 is lost. Thus, the loss of the primary power supply can be detected on the LV side of the DC-DC converter/transformer (as well) allowing for respective measures to be taken. In particular, according to a respective embodiment the control unit is further adapted to stop the generation of the pulse-width modulation signal at the low voltage board net as soon as it detects that the primary power supply is lost. Thus, if the control unit detects the loss of primary power it can immediately stop the generation of the PWM signal(s) at the LV board net. This is important for switching the operation to the second mode. In the following second mode of operation the PWM signal(s) can be generated by a PWM generator on the HV side.

Therefore, according to an embodiment the bidirectional power supply system comprises a PWM generator on the HV board net, the PWM generator being adapted to generate PWM signals in the second mode of operation. This PWM generator may take over the operation of the abovementioned control unit with respect to generating the PWM signals when the system switches to the second mode of operation. This way the PWM signal generation and therefore the proper working of the system is ensured in the second mode of operation as well.

According to an embodiment the bidirectional power supply system comprises a timer means adapted to shut down the operation in the second mode after a predetermined time span. The means may comprise a timer circuit adapted to shut down the operation in the second mode after a predetermined time span. Alternatively, the timer means may comprise a control unit, in particular a microcontroller unit (MCU), adapted to shut down the operation in the second mode after a predetermined time span via a respective control signal. Said control unit may be part of the BMS. It may be advantageous to provide a limit for the operation in the second mode, i.e. the HV to LV direction, to limit the load on the HV battery. In particular, if in the second mode power is drawn not from all of the cells of the HV battery but only from a part of the cellstack, the whole HV cellstack may get disbalanced.

According to an embodiment the bidirectional power supply system comprises a control element to provide a cell voltage dependent adjustment of the frequency and/or the width of the PWM signal during the second mode of operation. The control element is preferably arranged on the HV board net. The control element may comprise a voltage-controlled oscillator (VCO) for cell voltage dependent frequency adjustment. As the cell voltage of the battery cells of the HV traction battery depends on the state of charge of the cells, the PWM width or frequency should be altered to not exceed the transformer ET product for the given voltage. Thus, either the frequency should be increased or the pulse width of the PWM signal should be decreased when the voltage increases. Accordingly, either the frequency should be decreased or the pulse width of the PWM signal should be increased when the voltage decreases.

According to an embodiment the bidirectional power supply system comprises means for current limitation of the switching circuitry arranged, in particular on the low voltage board net. The switching circuitry may comprise one or more MOSFETs (metal oxide semiconductor field effect transistors) working as switches and actuated e.g. by one or more of the above mentioned control units, in particular by the BMS. In particular, the switching circuitry may comprise push-pull switching MOSFETs and/or snubber and/or voltage clamping circuitry, the snubber allowing for suppression of voltage transients in the electrical circuits. Such a current limitation may prevent excessively high currents which may compromise the system. Such means for current limitation may also or alternatively be provided on the HV board net side to prevent damage of the HV switching elements (MOSFETs) due to stress by means of overcurrent.

According to another aspect of the present invention, an electric vehicle comprising a bidirectional power supply system as disclosed above is provided. The electric vehicle comprises the low voltage board net and the high voltage board net, the board nets being galvanically isolated by the bidirectional DC-DC converter, wherein the high voltage traction battery powers the low voltage board net in the second mode of operation. The low voltage board net and the high voltage board net may also be considered to form part of the bidirectional power supply system.

Further aspects of the present invention can be learned from the dependent claims or the following description.

### Brief Description of the Drawings

Features will become apparent to those of ordinary skill in the art by describing in detail exemplary embodiments with reference to the attached drawings in which:

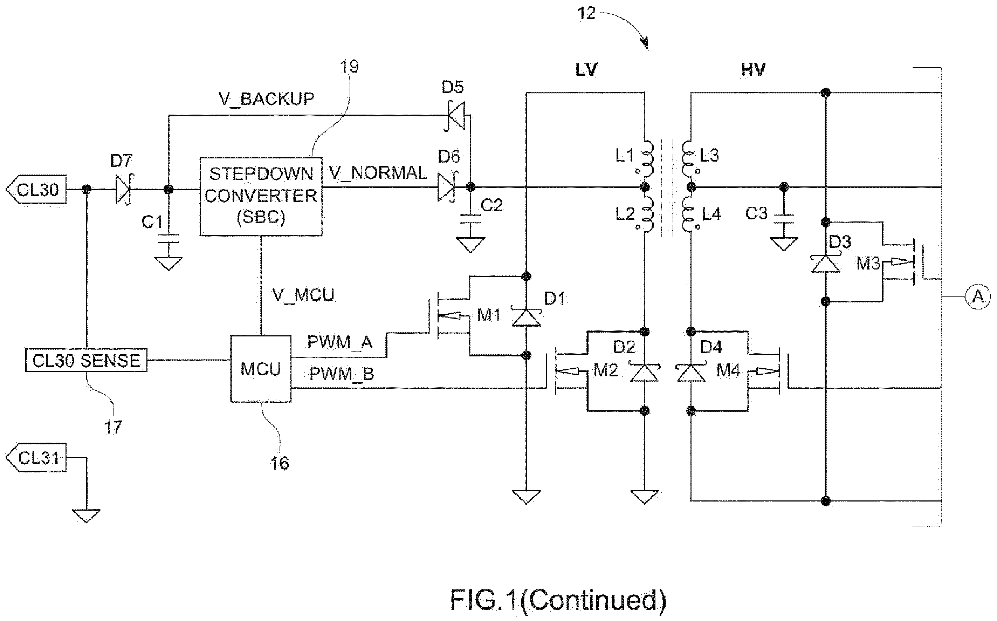

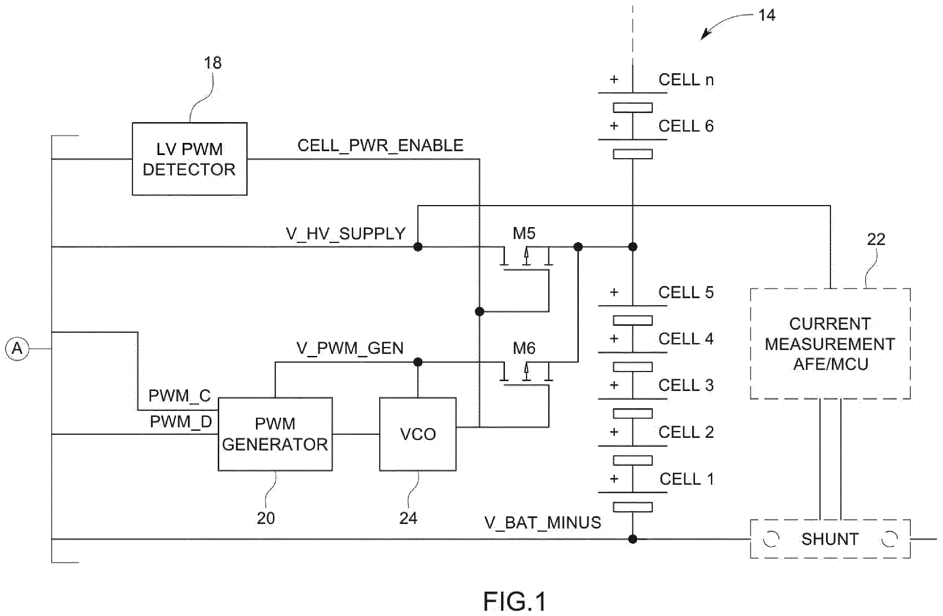

- Fig. 1: illustrates a schematic of a bidirectional power supply system according to an embodiment.

### Detailed Description of the Invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present invention however, may be embodied in various different forms, and should not be construed as being limited to only the illustrated embodiments herein. Rather, these embodiments are provided so that this invention will be thorough and complete, and will fully convey the aspects and features of the present invention to those skilled in the art.

Accordingly, processes, elements, and techniques that are not considered necessary to those having ordinary skill in the art for a complete understanding of the aspects and features of the present invention may not be described. In the drawings, the relative sizes of elements, layers, and regions may be exaggerated for clarity.

As used herein, the term "and/or" includes any and all combinations of one or more of the associated listed items. Further, the use of "may" when describing embodiments of the present invention refers to "one or more embodiments of the present invention In the following description of embodiments of the present disclosure, the terms of a singular form may include plural forms unless the context clearly indicates otherwise. Expressions such as "at least one of," when preceding a list of elements, modify the entire list of elements and do not modify the individual elements of the list.

As used herein, the term "substantially," "about," and similar terms are used as terms of approximation and not as terms of degree, and are intended to account for the inherent deviations in measured or calculated values that would be recognized by those of ordinary skill in the art. Further, if the term "substantially" is used in combination with a feature that could be expressed using a numeric value, the term "substantially" denotes a range of +/- 5% of the value centered on the value.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

The electronic or electric devices and/or any other relevant devices or components according to embodiments of the present invention described herein may be implemented utilizing any suitable hardware, firmware, software, or a combination of software, firmware, and hardware. In particular, an application-specific integrated circuit (ASIC) as a custom chip realization may be used while a specific firmware might be provided for the ASIC, i.e. flashed on a microcontroller to communicate with the ASIC and make use of it. Further, the various components of these devices may be implemented on a flexible printed circuit film, a tape carrier package (TCP), a printed circuit board (PCB), or formed on one substrate. The electrical connections or interconnections described herein may be realized by wires or conducting elements, e.g. on a PCB or another kind of circuit carrier. The conducting elements may comprise metallization, e.g. surface metallizations and/or pins, and/or may comprise conductive polymers or ceramics. Further electrical energy might be transmitted via wireless connections, e.g. using electromagnetic radiation and/or light.

Also, a person of skill in the art should recognize that the functionality of various computing devices may be combined or integrated into a single computing device, or the functionality of a particular computing device may be distributed across one or more other computing devices without departing from the scope of the embodiments of the present invention.

Unless otherwise defined, all terms (including technical and scientific terms) used herein have the same meaning as commonly understood by one of ordinary skill in the art to which the present invention belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

Fig. 1 shows schematically a circuit diagram of a bidirectional power supply system according to an embodiment being based on the push-pull topology.

Fig. 1 shows a low voltage (LV) board net at the left-hand side of the figure and a high voltage (HV) board net at the right-hand side of the figure. A bidirectional DC-DC converter utilizing a transformer 12 is adapted to transfer energy between LV board net and HV board net in both directions. Only the transformer 12 of the DC-DC converter is shown, the DC-DC converter may comprise further elements. The LV board net comprises an LV primary power supply which is not shown itself in the figure, but the connections CL30 and CL31 to the positive electrode and the negative electrode of the low voltage primary power supply are shown. The HV board net comprises an HV battery 14 which is the traction battery of the electric vehicle serving the propulsion of the electric vehicle. As can be seen in the figure the HV battery 14 comprises multiple cells 1 to n.

In a first mode of operation, i.e. "normal operation", the LV primary power supply powers the components of the LV board net, in particular a MCU (microcontroller unit) 16 which is part of a BMS. The MCU might reside on the BSM i.e. the main/only MCU on the BSM, or a dedicated MCU only enabling the functionality according to the invention might be used. The LV primary power supply further powers components of the HV board net, in particular an LV PWM detector 18, wherein the LV prevalent on the LV board net is transformed via the bidirectional DC-DC converter to a galvanically isolated voltage LV or HV on the HV board net. In the first mode of operation, V_NORMAL (preferably 6V) is provided by a step-down converter which might be implemented by means of a system basis chip (SBC) 19 and interleaved PWM comprising signals PWM_A and PWM_B is provided by the MCU 16, the interleaved PWM controlling the switching of the MOSFETs M1 and M2. With a transformer ratio of 1:1, a voltage of about V_NORMAL minus 2 times the diode drop will be present at V_HV_SUPPLY node. This voltage then powers the operation of the current sensing circuitry 22 on the HV side, and in particular the LV PWM detector 18. Diodes D3 and D4 are optional. They may be omitted in particular if the diodes of the MOSFETs can handle the load.

Should the LV primary power supply be lost, e.g. by losing the connection of the CL30, the bidirectional power supply system switches to a second mode of operation where power is supplied by the HV battery 14. Such a loss of the primary power supply is detected by the LV PWM detector 18 which analyzes the signal present on the HV side of the transformer 12 and switches operation of the bidirectional DC-DC converter to the second mode enabling the power supply from cells 1 to 5 of the HV battery 14 as soon as it detects that the LV side is not the transformer 12. Such switching is performed via the LV PWM detector 18 activating MOSFET M5 arranged on the HV board net which in turn enables the power supply via the cells 1 to 5 of the HV battery 14 to the HV side and activating MOSFET M6 arranged on the HV board net which enables the generation of the PWM via PWM generator 20 on the HV side. From this point onwards, the transformer 12 is operated in the second mode of operation, i.e. in the HV to LV direction.

Thus, in the second mode of operation part of the cells of the HV traction battery 14 of the electric vehicle are used as a backup power supply to power components of the low voltage board net, in particular the BMS/MCU.

Further, the MCU 16 which generates the PWM signals on the LV side detects the CL30 drop, i.e. the loss of the primary power supply, as well via a respective sensing element 17. The MCU 16 then immediately stops the generation of the PWM_A and PWM_B signals. Capacitors C1, C2 and C3 are provided which store enough energy to power the necessary components long enough to allow switching to the second mode of operation, in particular to allow the LV PWM detector 18 to notice the absence of operating the transformer 12 from the LV side, and to activate MOSFETs M5, M6 to enable the power supply via the HV battery 14 and the generation of the PWM on the HV side, respectively, as mentioned above. In this second mode of operation the PWM generator 20 takes over the generation of PWM signals from the MCU 16, the PWM generator 20 generating signals PWM_C and PWM_D on the HV side.

The second mode of operation can be time limited as it is disbalancing the HV battery 14 since it is not drawing the power from the whole cellstack but only from cells 1 to 5. Therefore, it is preferable to implement some sort of timer circuit which will shut down the operation in the second mode after a certain time. Alternatively, a current measurement MCU or AFE device 22 may be provided on the HV board net as shown in figure 1 in dashed lines, the MCU or analog front-end (AFE) device being adapted to shut down the DC-DC converter by means of digital outputs.

As the cell voltage of the cells of the HV battery 14 depends on state of charge (worst-case range for 5 cells is about 10 to 21V), the PWM width or frequency should be altered to not exceed the transformer ET product for the given voltage. Generally, the frequency can be increased, or the pulse width decreased when the voltage increases. In the embodiment shown in Figure 1, a voltage-controlled oscillator (VCO) 24 provides cell voltage dependent frequency adjustment.

Thus, with the invention a bidirectional redundant power supply is provided to supply the shunt based current measurement circuitry (LV to HV direction) in normal mode and operating backwards (HV to LV direction) when outage of vehicle power supply (CL30) is detected.

### Reference signs

- 12: transformer
- 14: high voltage battery
- 16: BMS/MCU
- 17: CL30 sensor
- 18: LV PWM detector
- 19: SBC
- 20: PWM generator on HV side
- 24: VCO

## Claims

1. A bidirectional power supply system for powering a control unit (16) of an electric vehicle, the bidirectional power supply system comprising a low voltage primary power supply adapted to power the control unit (16) in a first mode of operation, wherein the control unit (16) and the low voltage primary power supply form components of a low voltage board net of the bidirectional power supply system, a high voltage traction battery (14) of the electric vehicle as part of a high voltage board net of the bidirectional power supply system, and a bidirectional DC-DC converter (12) arranged to galvanically isolate the low voltage board net and the high voltage board net from one another, wherein the DC-DC-converter (12) is adapted to, in the first mode of operation, transfer energy from the low voltage board net to the high voltage board net to power components of the high voltage board net via the low voltage primary power supply, **characterized in that** the DC-DC converter (12) is further adapted to, in a second mode of operation, transfer energy from the high voltage board net to the low voltage board net to power the control unit (16) via the high voltage traction battery (14) in case of loss of the low voltage primary power supply, the bidirectional power supply system further comprising a measurement element adapted to detect whether the low voltage primary power supply is lost, and a switching element adapted to switch operation of the DC-DC converter (12) from the first mode to the second mode, if loss of the low voltage primary power supply is detected, wherein the measurement element comprises a PWM detector (18) arranged at the high voltage board net, the PWM detector (18) being adapted to analyze a pulse-width modulation signal present on the HV side of the DC-DC converter (12) and detect based on the analyzed signal whether the low voltage primary power supply is lost, wherein the PWM detector (18) is further adapted as the switching element to switch operation of the DC-DC converter (12) to the second mode as soon as it detects that the low voltage primary power supply is lost.

2. The bidirectional power supply system of claim 1, comprising at least one capacitor adapted to supply the measurement element with power in case of loss of the low voltage primary power supply long enough to allow the measurement element to detect that the low voltage primary power supply is lost and/or at least one capacitor adapted to supply the switching element long enough to allow the switching element to switch operation of the bidirectional DC-DC converter (12) to the second mode.

3. The bidirectional power supply system of one of the preceding claims, comprising a control unit (16) arranged at the low voltage board net for generating a pulse-width modulation signal during the first mode of operation, wherein the control unit (16) is adapted to detect that the low voltage primary power supply is lost.

4. The bidirectional power supply system of claim 3, wherein the control unit (16) is further adapted to stop the generation of the pulse-width modulation signal at the low voltage board net as soon as it detects that the low voltage primary power supply is lost.

5. The bidirectional power supply system of one of the preceding claims, comprising a PWM generator (20) on the high voltage board net, the PWM generator (20) being adapted to generate PWM signals in the second mode of operation.

6. The bidirectional power supply system of one of the preceding claims, comprising a timer means (22) adapted to shut down the operation in the second mode after a predetermined time span.

7. The bidirectional power supply system of claim 6, wherein the timer means comprise a timer circuit adapted to shut down the operation in the second mode after a predetermined time span.

8. The bidirectional power supply system of claim 6, wherein the timer means comprise a control unit (22) adapted to shut down the operation in the second mode after a predetermined time span via a respective control signal.

9. The bidirectional power supply system of one of the preceding claims, comprising a control element (24) to provide a cell voltage dependent adjustment of the frequency and/or the width of the PWM signal during the second mode of operation.

10. The bidirectional power supply system of one of the preceding claims, comprising means for current limitation of the switching circuitry, in particular on the low voltage board net.

11. An electric vehicle comprising a bidirectional power supply system of any one of the preceding claims.

12. The electric vehicle of claim 11, comprising the low voltage board net and the high voltage board net, the board nets being galvanically isolated via the DC-DC converter (12), wherein the high voltage traction battery powers the low voltage board net in the second mode of operation.

## Patentansprüche

1. Bidirektionales Stromversorgungssystem zur Speisung einer Steuereinheit (16) eines Elektrofahrzeugs, wobei das bidirektionale Stromversorgungssystem Folgendes umfasst: eine primäre Niederspannungsstromversorgung, die dazu angepasst ist, die Steuereinheit (16) in einem ersten Betriebsmodus zu speisen, wobei die Steuereinheit (16) und die primäre Niederspannungsstromversorgung Komponenten eines Niederspannungsbordnetzes des bidirektionalen Stromversorgungssystems bilden, eine Hochspannungstraktionsbatterie (14) des Elektrofahrzeugs als Teil eines Hochspannungsbordnetzes des bidirektionalen Stromversorgungssystems, und einen bidirektionalen DC-DC-Wandler (12), der eingerichtet ist, um das Niederspannungsbordnetz und das Hochspannungsbordnetz galvanisch voneinander zu isolieren, wobei der DC-DC-Wandler (12) angepasst ist, um in dem ersten Betriebsmodus Energie von dem Niederspannungsbordnetz an das Hochspannungsbordnetz zu übertragen, um Komponenten des Hochspannungsbordnetzes über die primäre Niederspannungsstromversorgung zu speisen, **dadurch gekennzeichnet, dass** der DC-DC-Wandler (12) ferner angepasst ist, um in einem zweiten Betriebsmodus Energie von dem Hochspannungsbordnetz an das Niederspannungsbordnetz zu übertragen, um die Steuereinheit (16) über die Hochspannungstraktionsbatterie (14) im Falle eines Verlustes der primären Niederspannungsstromversorgung zu speisen, wobei das bidirektionale Stromversorgungssystem ferner ein Messelement, das angepasst ist, um zu detektieren, ob die primäre Niederspannungsstromversorgung ausgefallen ist, und ein Schaltelement umfasst, das angepasst ist, um den Betrieb des DC-DC-Wandlers (12) aus dem ersten Modus in den zweiten Modus zu schalten, wenn ein Verlust der primären Niederspannungsstromversorgung detektiert ist, wobei das Messelement einen PWM-Detektor (18) umfasst, der an dem Hochspannungsbordnetz angeordnet ist, wobei der PWM-Detektor (18) angepasst ist, um ein Pulsweitenmodulationssignal zu analysieren, das auf der HV-Seite des DC-DC-Wandlers (12) vorliegt, und basierend auf dem analysierten Signal zu detektieren, ob die primäre Niederspannungsstromversorgung ausgefallen ist, wobei der PWM-Detektor (18) ferner als das Schaltelement angepasst ist, um den Betrieb des DC-DC-Wandlers (12) in den zweiten Modus zu schalten, sobald er detektiert, dass die primäre Niederspannungsstromversorgung ausgefallen ist.

2. Bidirektionales Stromversorgungssystem nach Anspruch 1, umfassend mindestens einen Kondensator, der angepasst ist, um das Messelement im Falle eines Verlusts der primären Niederspannungsstromversorgung so lange zu speisen, dass das Messelement detektieren kann, dass die primäre Niederspannungsstromversorgung ausgefallen ist, und/oder mindestens einen Kondensator, der angepasst ist, um das Schaltelement so lange zu speisen, dass das Schaltelement den Betrieb des bidirektionalen DC-DC-Wandlers (12) in den zweiten Modus schalten kann.

3. Bidirektionales Stromversorgungssystem nach einem der vorhergehenden Ansprüche, umfassend eine Steuereinheit (16), die am Niederspannungsbordnetz angeordnet ist, um ein Pulsweitenmodulationssignal während des ersten Betriebsmodus zu erzeugen, wobei die Steuereinheit (16) angepasst ist, um zu detektieren, dass die primäre Niederspannungsstromversorgung ausgefallen ist.

4. Bidirektionales Stromversorgungssystem nach Anspruch 3, wobei die Steuereinheit (16) ferner so angepasst ist, dass sie die Erzeugung des Pulsweitenmodulationssignals am Niederspannungsbordnetz stoppt, sobald sie detektiert, dass die primäre Niederspannungsstromversorgung ausgefallen ist.

5. Bidirektionales Stromversorgungssystem nach einem der vorhergehenden Ansprüche, umfassend einen PWM-Generator (20) an dem Hochspannungsbordnetz, wobei der PWM-Generator (20) angepasst ist, um PWM-Signale im zweiten Betriebsmodus zu erzeugen.

6. Bidirektionales Stromversorgungssystem nach einem der vorhergehenden Ansprüche, umfassend ein Timer-Mittel (22), das angepasst ist, um den Betrieb im zweiten Modus nach einer vorbestimmten Zeitspanne abzuschalten.

7. Bidirektionales Stromversorgungssystem nach Anspruch 6, wobei das Timer-Mittel eine Timer-Schaltung umfasst, die angepasst ist, um den Betrieb im zweiten Modus nach einer vorbestimmten Zeitspanne abzuschalten.

8. Bidirektionales Stromversorgungssystem nach Anspruch 6, wobei das Timer-Mittel eine Steuereinheit (22) umfasst, die angepasst ist, um den Betrieb im zweiten Modus nach einer vorbestimmten Zeitspanne über ein entsprechendes Steuersignal abzuschalten.

9. Bidirektionales Stromversorgungssystem nach einem der vorhergehenden Ansprüche, umfassend ein Steuerelement (24), um eine zellspannungsabhängige Anpassung der Frequenz und/oder der Breite des PWM-Signals während des zweiten Betriebsmodus bereitzustellen.

10. Bidirektionales Stromversorgungssystem nach einem der vorhergehenden Ansprüche, umfassend Mittel zur Strombegrenzung des Schaltkreisanordnung, insbesondere an dem Niederspannungsbordnetz.

11. Elektrofahrzeug, umfassend ein bidirektionales Stromversorgungssystem nach einem der vorhergehenden Ansprüche.

12. Elektrofahrzeug nach Anspruch 11, umfassend das Niederspannungsbordnetz und das Hochspannungsbordnetz, wobei die Bordnetze über den DC-DC-Wandler (12) galvanisch isoliert sind, wobei die Hochspannungstraktionsbatterie das Niederspannungsbordnetz in dem zweiten Betriebsmodus speist.

## Revendications

1. Système d'alimentation bidirectionnelle pour l'alimentation d'une unité de commande (16) d'un véhicule électrique, le système d'alimentation bidirectionnelle comportant une alimentation primaire à basse tension adaptée pour alimenter l'unité de commande (16) dans un premier mode de fonctionnement, dans lequel l'unité de commande (16) et l'alimentation primaire à basse tension forment des composants d'un réseau à bord à basse tension du système d'alimentation bidirectionnelle, une batterie de traction à haute tension (14) du véhicule électrique faisant partie d'un réseau à bord à haute tension du système d'alimentation bidirectionnelle, et un convertisseur CC-CC bidirectionnel (12) agencé pour isoler galvaniquement le réseau à bord à basse tension et le réseau à bord à haute tension l'un de l'autre, dans lequel le convertisseur CC-CC (12) est adapté pour, dans le premier mode de fonctionnement, transférer de l'énergie du réseau à bord à basse tension au réseau à bord à haute tension pour alimenter des composants du réseau à bord à haute tension via l'alimentation primaire à basse tension, **caractérisé en ce que** le convertisseur CC-CC (12) est en outre adapté pour, dans un second mode de fonctionnement, transférer de l'énergie du réseau à bord à haute tension au réseau à bord à basse tension pour alimenter l'unité de commande (16) via la batterie de traction à haute tension (14) en cas de perte de l'alimentation primaire à basse tension, le système d'alimentation bidirectionnelle comportant en outre un élément de mesure adapté pour détecter si l'alimentation primaire à basse tension est perdue, et un élément de commutation adapté pour commuter le fonctionnement du convertisseur CC-CC (12) du premier mode au second mode, si une perte de l'alimentation primaire à basse tension est détectée, dans lequel l'élément de mesure comporte un détecteur de modulation d'impulsions en largeur, PWM, (18) agencé au niveau du réseau à bord à haute tension, le détecteur PWM (18) étant adapté pour analyser un signal de modulation d'impulsions en largeur présent sur le côté haute tension, HV, du convertisseur CC-CC (12) et détecter, sur la base du signal analysé, si l'alimentation primaire à basse tension est perdue, dans lequel le détecteur PWM (18) est en outre adapté, en tant qu'élément de commutation, pour commuter le fonctionnement du convertisseur CC-CC (12) vers le second mode dès qu'il détecte que l'alimentation primaire à basse tension est perdue.

2. Système d'alimentation bidirectionnelle selon la revendication 1, comportant au moins un condensateur adapté pour alimenter l'élément de mesure en cas de perte de l'alimentation primaire à basse tension suffisamment longtemps pour permettre à l'élément de mesure de détecter que l'alimentation primaire à basse tension est perdue et/ou au moins un condensateur adapté pour alimenter l'élément de commutation suffisamment longtemps pour permettre à l'élément de commutation de commuter le fonctionnement du convertisseur CC-CC bidirectionnel (12) vers le second mode.

3. Système d'alimentation bidirectionnelle selon l'une des revendications précédentes, comportant une unité de commande (16) agencée au niveau du réseau à bord à basse tension pour la génération d'un signal de modulation d'impulsions en largeur pendant le premier mode de fonctionnement, dans lequel l'unité de commande (16) est adaptée pour détecter que l'alimentation primaire à basse tension est perdue.

4. Système d'alimentation bidirectionnelle selon la revendication 3, dans lequel l'unité de commande (16) est en outre adaptée pour arrêter la génération du signal de modulation d'impulsions en largeur au niveau du réseau à bord à basse tension dès qu'elle détecte que l'alimentation primaire à basse tension est perdue.

5. Système d'alimentation bidirectionnelle selon l'une des revendications précédentes, comportant un générateur PWM (20) sur le réseau à bord à haute tension, le générateur PWM (20) étant adapté pour générer des signaux PWM dans le second mode de fonctionnement.

6. Système d'alimentation bidirectionnelle selon l'une des revendications précédentes, comportant un moyen temporisateur (22) adapté pour arrêter le fonctionnement dans le second mode après un laps de temps prédéterminé.

7. Système d'alimentation bidirectionnelle selon la revendication 6, dans lequel le moyen temporisateur comporte un circuit temporisateur adapté pour arrêter le fonctionnement dans le second mode après un laps de temps prédéterminé.

8. Système d'alimentation bidirectionnelle selon la revendication 6, dans lequel le moyen temporisateur comporte une unité de commande (22) adaptée pour arrêter le fonctionnement dans le second mode après un laps de temps prédéterminé via un signal de commande respectif.

9. Système d'alimentation bidirectionnelle selon l'une des revendications précédentes, comportant un élément de commande (24) pour fournir un réglage dépendant de la tension de cellule de la fréquence et/ou de la largeur du signal PWM pendant le second mode de fonctionnement.

10. Système d'alimentation bidirectionnelle selon l'une des revendications précédentes, comportant un moyen de limitation de courant de la circuiterie de commutation, en particulier sur le réseau à bord à basse tension.

11. Véhicule électrique comportant un système d'alimentation bidirectionnelle selon l'une quelconque des revendications précédentes.

12. Véhicule électrique selon la revendication 11, comportant le réseau à bord à basse tension et le réseau à bord à haute tension, les réseaux à bord étant galvaniquement isolés via le convertisseur CC-CC (12), dans lequel la batterie de traction à haute tension alimente le réseau à bord à basse tension dans le second mode de fonctionnement.
